# EUROPEAN PATENT APPLICATION

(11) **EP 4 513 401 A1**
(43) Date of publication of application: **26.02.2025**
(21) Application number: 24153151.6
(22) Date of filing: 22.01.2024
(51) Int. Cl.: G06Q 10/0639, G06Q 50/04, G05B 19/418

(54) **MULTI-SENSOR SYSTEM FOR OPERATION STATUS MONITORING**

(30) Priority: 25.08.2023 US 202318238395
(71) Applicant: Hitachi, Ltd., Tokyo 100-8280 (JP)
(72) Inventor: ZHOU, Quan, Tokyo, 100-8280 (JP)
(74) Representative: Manitz Finsterwald Patent- und Rechtsanwaltspartnerschaft mbB

(57) **Abstract**

Example implementations as described herein are directed to a system for monitoring the operational status of multi-sensor systems. The system may comprise a non-vision based multi-sensor system with sensors deployed to monitor operator presence and activities at various locations in the production environment. The sensor system may provide real-time, digitized production related information about operators. Such data may be combined with other production data to analyze such data and provide solutions and recommendations on production monitoring, troubleshooting, analysis and also help drive continuous improvement activities.

## Description

### CROSS REFERENCE TO RELATED APPLICATION(S)

This application claims the benefit of and priority to U.S. Provisional Application Serial No. 63/441,349, entitled "MULTI-SENSOR SYSTEM FOR OPERATION STATUS MONITORING" and filed on January 26, 2023, which is expressly incorporated by reference herein in its entirety.

### BACKGROUND

### Field

The present disclosure is directed to systems and method involving the monitoring of operational status of multi-sensor systems.

### Related Art

Digital transformation has been and will continue to be one of the most important topics across various industries, especially the manufacturing industry. Different technologies and tools are emerging around smart manufacturing, and application of the Internet of Things (IoT) for industrial use, such as Industrial IoT (IIoT). Digital solutions with big data paint a wonderful picture for the future of manufacturing: visualized & quantified manufacturing processes; centralized information analysis & decision making; remote/cyber-physical manufacturing systems, which further brings reduced operational costs, increased efficiency at all levels, as well as revenue growth. As a result, regardless of their company size and their current stage of digitization, manufacturers are taking the ride on this digital transformation wave.

Unfortunately, companies may experience difficulties in employing the digital solutions and are stuck with traditional information management systems like whiteboards, paper documents or spreadsheets. This can be caused by many factors, such as but not limited to the lack of digital data acquisition and analysis, especially with smaller manufacturers with legacy equipment that cannot readily provide digital data. IIoT requires some sensors for digital data collection, which may bring difficulties in its application, especially in sensor development, selection, installation, integration, and/or data analysis.

In one example related art describes a system for action recognition to determine cycles, processes, actions, sequences, objects in one or more sensor streams. The system may include an analytic tool that may include real time verification of packing or unpacking by action and image recognition.

In one example related art describes a system that incorporates devices as inputs and outputs that incorporates events and measurements recorded by devices and sensors for build triggers and time-saving workflows.

In one example related art describes a monitoring system that monitor people, objects, or devices at a manufacturing site that allows for accurate understanding of the movements of people and objects of a manufacturing process to improve work efficiency.

In one example related art describes a system to automatically record work contents performed by a plurality of devices and the work time such that a work analyzing device extracts contents of events generated by the devices in the vicinity of the operator within a time period and generates work analysis information by associating the extracted event contents with the time period.

In one example related art describes a system that analyzes a combination of a production result and a production plan and extract an element which becomes a target to be improved.

The above examples may seek to improve manufacturing processes but one of the major problems in operational data collection is that most of the production processes in the manufacturing industry involve different levels of manual operations. However, operation data with manual work is still difficult to track, let alone real-time data and digitized data ready for analysis. Another issue is that the above examples may use camera/video based approaches which may lead to privacy and legislation concerns as well as operator acceptance on the shop floor, which may be unfavorable for shop floor operations.

### SUMMARY

The present disclosure involves the monitoring of operational status of multi-sensor systems.

Therefore, the present disclosure proposes a system that monitors the operational status of multi-sensor systems, by utilizing non-vision based multi-sensor systems for human data and other data collection. The system may apply advanced artificial intelligence (AI) / machine learning (ML) techniques with sensor fusion for a comprehensive operation data analysis. Machine data and status may be monitored through automation and digitization. At the same time, real-time operator status data is important for manufacturers to understand the on-going operation including production efficiency, quality, throughput, safety etc.

An issue with the related art is that there have been difficulties in obtaining real-time operator status, such that manufacturers are not able to optimize/maximize resource (e.g., machine and worker) utilization due to lack of real-time operator status (e.g., available or not, programming, setting up fixture, operate a machine). For example, managers typically only have information regarding shift hours of the operators (clock in & out) versus actual operations and their durations performed by the operators. Typical issue is that machine utilization is not consistent with operator utilization: i.e. machine is running and operator is working (ideal case); machine is running and operator is away (wasted man hours); machine is idling and operator is away (wasted both machine and man hours).

Another issue with the related art is that when machine and/or man utilization is low, manufacturers are not able to identify operation bottleneck for processes involving many manual steps. Hence not able to allocate resource to address existing line bottleneck, assign training for operators with low performance or provide insights to improve future line design (e.g., how many operators for the tasks) due to failure of quantifying operator's time spent at each work zone/job step (e.g., cycle time). The cycle time of the manual procedures may be captured to provide quantitative data for bottleneck identification/analysis.

Another issue with the related art is that a walk path or movement trajectory of the operator is often not recorded/tracked, so that physical layout optimization cannot be performed. Neither can the cycle time of such activities be tracked and analyzed. For example, operator needs to walk to multiple locations for picking up difference parts, an efficient layout needs to be determined.

Another issue with the related art is that quality issue and warranty claims caused by failure to identify non-standardized work procedure (e.g., operator skipping/missing steps, operator install wrong parts, execution in wrong sequence). Also, historical data for each production step could provide traceability to quality events such as recall, warranty issues etc.

Another issue with the related art is that standardized work instructions are mostly on a timed sequence that is only pre- programmed. Sensor data from the operator actions may be used to trigger the work instructions to help the flow of the production process. For example, an operator finishes a step, the sensor may send a signal indicating complete of the step, and work instruction for a following step may be presented to the operator.

To address the issues of the related art, the example implementations described herein involve the following aspects.

Example implementation described herein involve a novel technique for the monitoring of operational status of multi-sensor systems. The system may comprise a non-vision based multi-sensor system with sensors deployed to monitor operator presence and activities at various critical locations in the production environment. The sensor system may provide real-time, digitized production related information about operators. Such data may be combined with other production data (e.g., machine status, job scheduling, parts tracking, quality, or the like) and a digital service is provided to analyze such data and provide solutions and recommendations on production monitoring, troubleshooting, analysis and also help drive continuous improvement activities.

In an example implementation involving the system, the system is configured for monitoring a production process. The system may comprise at least one or more of a sensor system acquiring data from production machinery, a sensor system acquiring data from operators, a sensor system acquiring data from material used in the production process, a calculation part calculating based on the data acquired from the sensors, an analysis part analyzing at least data acquired from operators with AI based on the result of the calculation, or a display part informing operators of analysis result and countermeasures.

Aspects of the present disclosure include a method that involves obtaining production data corresponding to production machinery utilized during the production process; obtaining operator data corresponding to an operator operating the production machinery; obtaining material data corresponding to material used by at least one of the operator or the production machinery in the production process; calculating a calculation data set based on the production data, the operator data, and the material data; and performing an analysis at least on the operator data based on results of the calculation data set.

Aspects of the present disclosure further include a computer program storing instructions that involve obtaining production data corresponding to production machinery utilized during the production process; obtaining operator data corresponding to an operator operating the production machinery; obtaining material data corresponding to material used by at least one of the operator or the production machinery in the production process; calculating a calculation data set based on the production data, the operator data, and the material data; and performing an analysis at least on the operator data based on results of the calculation data set.

Aspects of the present disclosure include a system that involves means for obtaining production data corresponding to production machinery utilized during the production process; means for obtaining operator data corresponding to an operator operating the production machinery; means for obtaining material data corresponding to material used by at least one of the operator or the production machinery in the production process; means for calculating a calculation data set based on the production data, the operator data, and the material data; and means for performing an analysis at least on the operator data based on results of the calculation data set.

Aspects of the present disclosure involve an apparatus to facilitate monitoring a production process, the apparatus involves a processor, configured to obtain production data corresponding to production machinery utilized during the production process; obtain operator data corresponding to an operator operating the production machinery; obtain material data corresponding to material used by at least one of the operator or the production machinery in the production process; calculate a calculation data set based on the production data, the operator data, and the material data; and perform an analysis at least on the operator data based on results of the calculation data set.

### BRIEF DESCRIPTION OF DRAWINGS

FIG. 1 is a diagram illustrating an example system architecture of the system.
FIGs. 2A-2C are diagrams illustrating functions and features of steps of the system.
FIGs. 3A-3B are diagrams illustrating examples of a man data analysis process.
FIGs. 4A-4B are diagrams illustrating examples of a multi-sensor system.
FIG. 5 is a diagram illustrating an example of using sensors with an operator.
FIG. 6 is a diagram illustrating an example of tracking a movement of an operator.
FIG. 7 is a diagram illustrating examples charts and a UI.
FIG. 8 is a diagram illustrating an example of using a sensor signal for active work instruction prompts.
FIG. 9 is a diagram illustrating an example of cycle time improvement.
FIG. 10 is a diagram illustrating an example of material savings.
FIG. 11 is a diagram illustrating an example of method optimization.
FIG. 12 is a diagram illustrating an example of bottleneck identification and countermeasures.
FIG. 13 is a diagram illustrating an example of operation monitoring.
FIG. 14 is a diagram illustrating an example of motion path monitoring and improvement.
FIG. 15 is a diagram illustrating an example of quality monitoring and improvement.
FIG. 16 is a diagram illustrating an example of an automated work instruction prompting.
FIG. 17 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

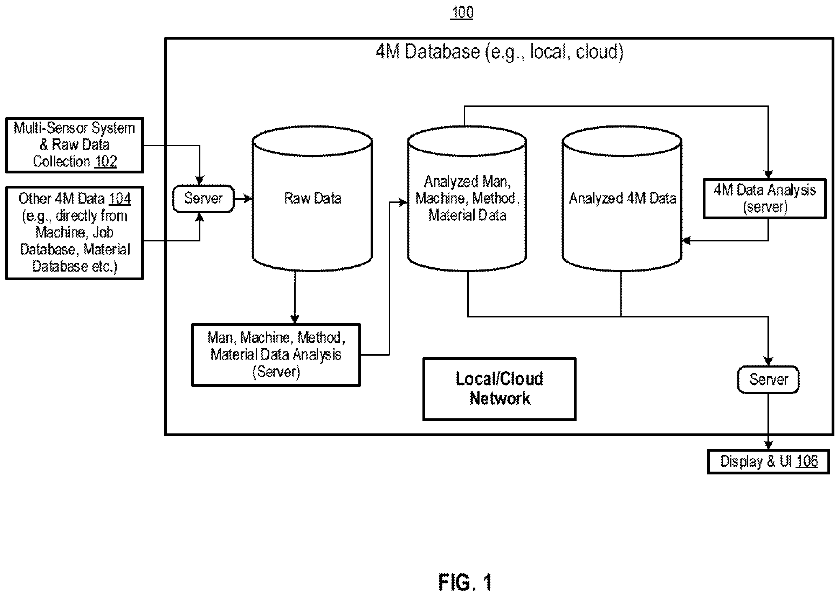

FIG. 1 shows an example of an overall system architecture of the system 100. The system may comprise data acquisition (e.g., 102, 104), calculation, analysis, storage, and display 106. In some aspects, data collected may be comprised of multi-sensor system and raw data, as shown for example at 102 of FIG. 1. In some aspects, data collected may be comprised of other data comprised of directly from a machine, a job database, material database, or the like, as shown for example at 104 of FIG. 1. The collected data may be processed by a server and analyzed by the system 100, such that the results are outputted to the display 106.

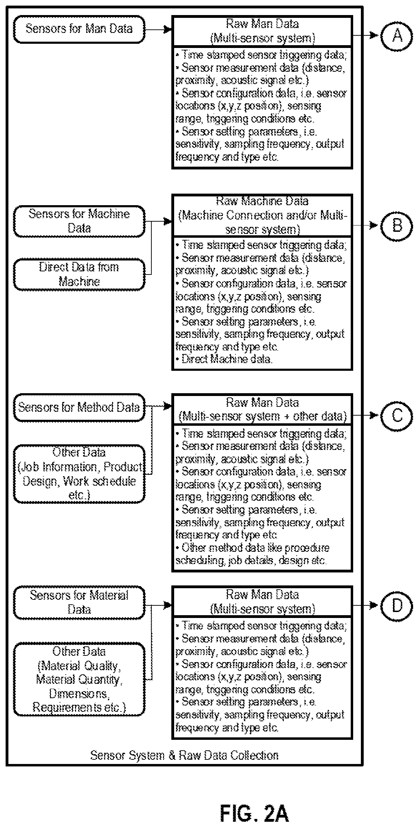

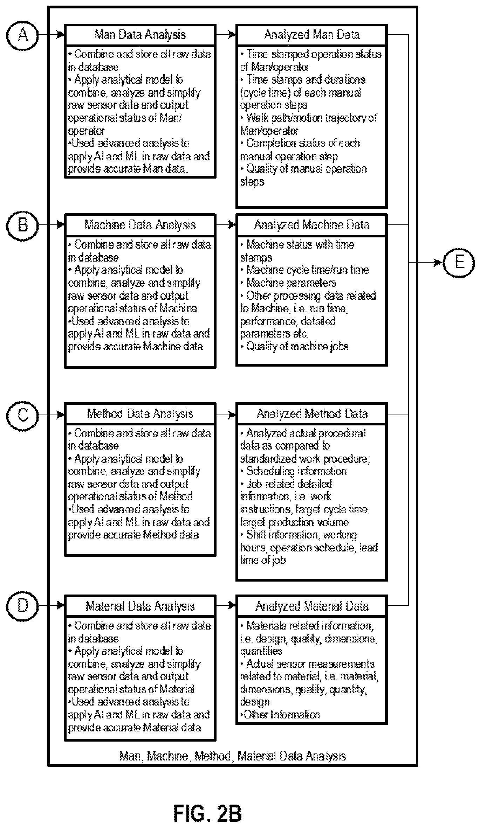

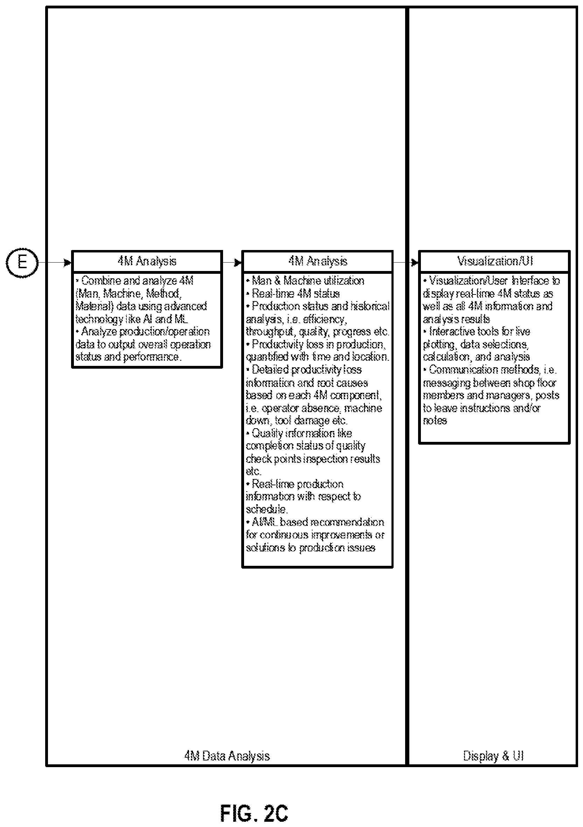

FIGs. 2A-2C show a diagram of detailed functions and features of steps that may be taken by the system 100 shown in FIG. 1. Although the system can be used to collect both Man, Machine, Material, and Method data (4M), an advantage of the system is its ability to collect digitized and quantified data related to a human and/or operator. The system incorporates raw data from the multi-sensor system and other related production data like physical layout of the environment, job information, schedule/ work instructions, then performs pre-processing of the human/operator data based on a custom-made algorithm. After that, analyzed man data may be combined with other similarly obtained data, such as but not limited to, machine, method, or material data for further advanced 4M analysis. The final analysis outputs are higher level data directly representing the production status with AI/ML, based advanced analytics, which may further provide one or more recommendations for continuous improvements, bottleneck analysis, solutions, or the like. In addition, a UI may present the analyzed information with feedback and recommendations for an end user.

In some aspects, raw man data (e.g., multi-sensor system) may comprise time stamped sensor triggering data, sensor measurement data (e.g., distance, proximity, acoustic signal, or the like), sensor configuration data, sensor location (e.g., x, y, z position), sensing range, triggering conditions, or the like, or sensor setting parameters (e.g., sensitivity, sampling frequency, output frequency, or type). In some aspects, raw machine data (e.g., machine connection and/or multi-sensor system) may comprise time stamped sensor triggering data, sensor measurement data (e.g., distance, proximity, acoustic signal, or the like), sensor configuration data, sensor location (e.g., x, y, z position), sensing range, triggering conditions, or the like, sensor setting parameters (e.g., sensitivity, sampling frequency, output frequency, or type), or direct machine data. In some aspects, raw man data (e.g., multi-sensor system and other data) may comprise time stamped sensor triggering data, sensor measurement data (e.g., distance, proximity, acoustic signal, or the like), sensor configuration data, sensor location (e.g., x, y, z position), sensing range, triggering conditions, or the like, sensor setting parameters (e.g., sensitivity, sampling frequency, output frequency, or type), or other method data (e.g., procedure scheduling, job details, design).

In some aspects, man data analysis may comprise combination and storing of all raw data in a database, application of an analytical model to combine, analyze, and simplify raw sensor data and output operational status of man/operator, or utilization of advanced analysis to apply AI/ML in raw data and provide accurate man data. In some aspects, the analyzed man data may comprise time stamped operation status of the man/operator, time stamps and durations (e.g., cycle time) of each manual operation steps, walk path/motion trajectory of the man/operator, completion status of each manual operation step, or quality of the manual operation steps.

In some aspects, machine data analysis may comprise combination and storing of all raw data in a database, application of an analytical model to combine, analyze, and simplify raw sensor data and output operational status of machine, or utilization of advanced analysis to apply AI/ML in raw data and provide accurate machine data. In some aspects, the analyzed machine data may comprise time stamped operation status of the machine, machine cycle time/run time, other processing data related to the machine (e.g., run time, performance, detailed parameters), or quality of machine jobs.

In some aspects, method data analysis may comprise combination and storing of all raw data in a database, application of an analytical model to combine, analyze, and simplify raw sensor data and output operational status of the method, or utilization of advanced analysis to apply AI/ML in raw data and provide accurate method data. In some aspects, the analyzed method data may comprise analysis of actual procedural data as compared to standardized work procedure, scheduling information, job related detailed information (e.g., work instructions, target cycle time, target production volume), shift information, working hours, operation schedule, or lead time of job.

In some aspects, material data analysis may comprise combination and storing of all raw data in a database, application of an analytical model to combine, analyze, and simplify raw sensor data and output operational status of the material, or utilization of advanced analysis to apply AI/MI, in raw data and provide accurate method data. In some aspects, the analyzed material data may comprise materials related information (e.g., design, quality, dimensions, quantities), actual sensor measurements related to material (e.g., material, dimensions, quality, quantity, design), or other information.

In some aspects, 4M analysis may comprise a combination and analysis of 4M data using advanced technology (e.g., AI/ML), or analysis of production/operation data to output overall operation status and performance. In some aspects, 4M analysis may comprise man and machine utilization, real-time 4M status, production status and historical analysis (e.g., efficiency, throughput, quality, progress), productivity loss in production, quantified with time and location, detailed productivity loss information and root causes based on each 4M component (e.g., operator absence, machine down, tool damage), quality information (e.g., completion status or quality check points inspection results), real-time production information with respect to schedule, or AI/ML based recommendation for continuous improvements or solutions to production issues.

In some aspects, a visualization or display of results (e.g., user interface (UI)), may comprise visualization or UI to display real-time 4M status as well as all 4M information and analysis results, interactive tools for live plotting, data selections, calculations, analysis, communication methods (e.g., messaging between shop floor members and managers, posts to leave instructions or notes).

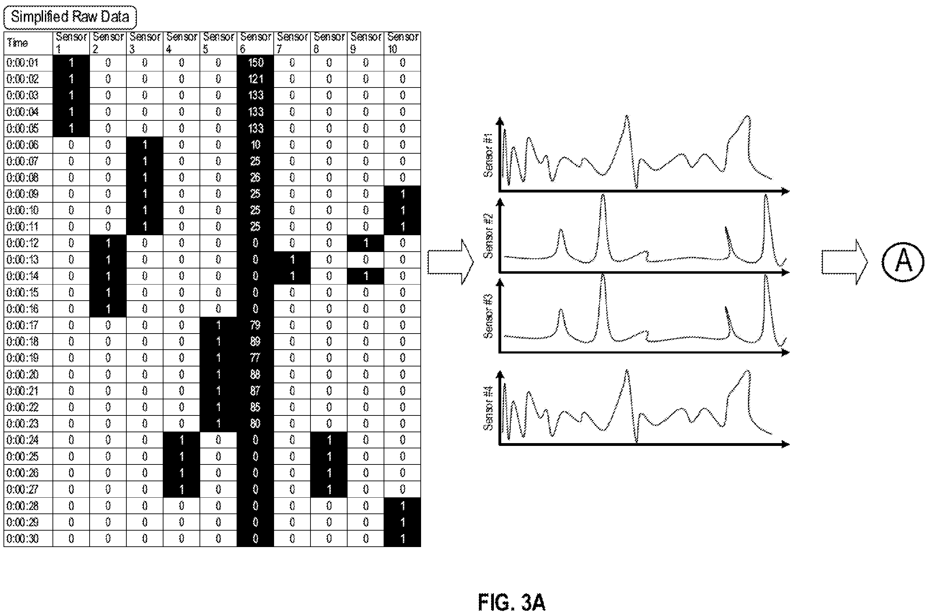

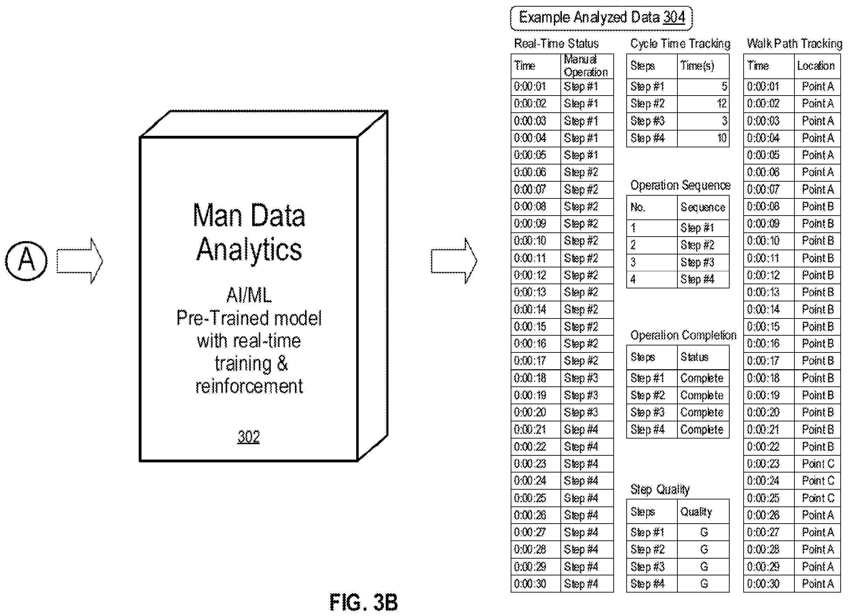

FIGs. 3A-3B show an example of a Man Data Analysis process. In some aspects, raw data from various sensors may be collected, filtered, and analyzed using advanced AI/ML, model 302. The model may be pre-trained or may configured with real-time training and reinforcement. Through such analysis, direct operational data 304 may be obtained. The operational data 304 may comprise information related to real-time status, cycle time tracking, walk path tracking, or operation sequence. Real-time status may provide information related to the current step or phase of a process. For example, the real-time status may indicate which step of manual operation is or has taken place at a given time. Examples may comprise real-time operator status, manual cycle time tracking, manual operation sequence, completion status of each manual step, direct quality information from sensor measurements, and operator walk path tracking.

Some of the issues to be solved with the AI/ML, analytics may include a determination of operation actions when several sensors are triggered at the same time (e.g., link multiple sensor data to complex issue/actions), identification of mistakes in operator actions when the sensor(s) reading is normally fluctuating (e.g., noise), modelling of longer ranges of sensor data (e.g., weeks, months) to spot systemic problems like machine tooling wear, slowed speed, slipping operator performance.

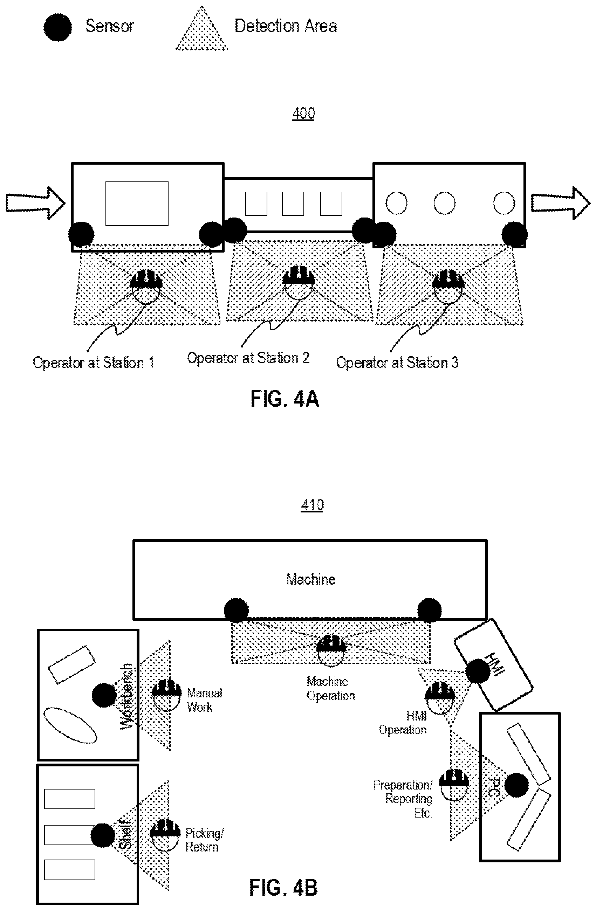

FIG. 4A and 4B show an example setup of a multi-sensor system 400, 410 with sensors deployed to monitor operator presence and activities at various critical locations in the production environment (e.g., production line and computer numerical control machining). The sensors may comprise any of acoustic sensors, ultrasonic sensor, photoelectric sensors, infra-red sensors, or any other non-vision based sensors.

Sensor detection may be triggered by operator presence and/or actions to indicate a change in status or measured data, such as but not limited to distance, shape, reflectivity, temperature, or the like, which may be converted to operation status related data. In some aspects, operator(s) presence or actions may be monitored by sensors covering each station (e.g., station 1, station 2, or station 3) respectively. In some aspects, an operator may be working on a workbench, either triggered by his presence in front of the workbench or by detailed hand movements on the workbench surface. Similarly, operation may be detected by either operator's presence in front of a shelf, or with hand motions on the shelf, or with actions when picking up components. Areas that may be monitored may also comprise machine/work station, human-machine interaction system (HMI), computer desk, or the like.

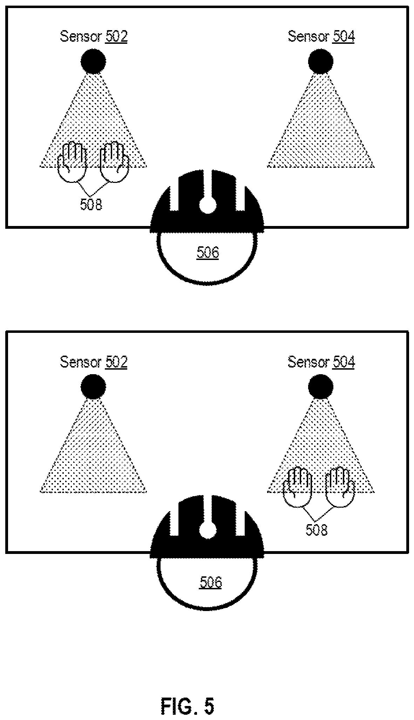

FIG. 5 provides a diagram 500 of using sensors with an operator 506. The sensors may be configured to identify actions of the operator. For example, operator hand movements detection may be by any one of sensor 502 or sensor 504 to indicate the operation. Similarly, the sequence of such actions can also be tracked and recorded. As shown in FIG. 5, the sensor 502 may detect the presence of hands 508 of the operator 506, such that the hand movement of the operator while performing tasks may be detected by the sensor 504, such that the hands of the operator are not within the vicinity of sensor 502.

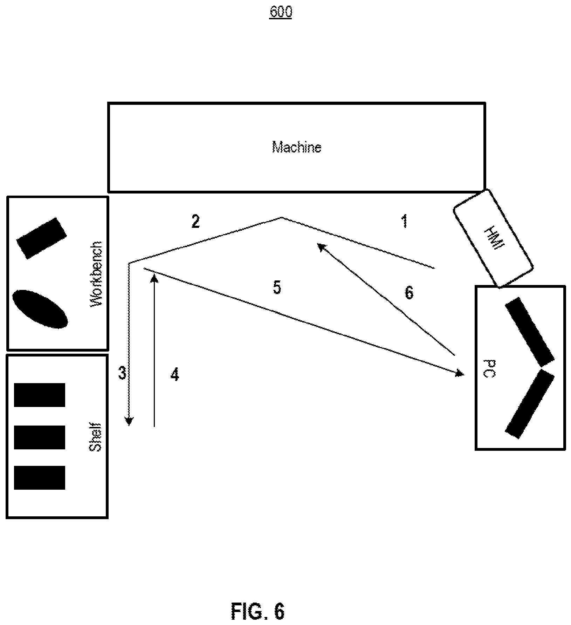

FIG. 6 shows an example diagram 600 of tracking a walk path or movement trajectory of the operator. Such information may be used to track cycling time, and also used to check against the standardized work procedures. Furthermore, the data can be used for optimization of the physical layout of the workspace and/or standardized work procedures to improve efficiency of the working environment and procedures. Similarly, the movement trajectory is not limited to operator positions, it could also be hand movement trajectory or other moving parts of the operator. In the example of FIG. 6, the numbered arrows may indicate a step-by-step process the operator may take while performing a task. For example, the operator may start at the HMI, then, at 1, go to a machine, then at 2, go to a workbench, then at 3, go to a shelf, then at 4 go to the workbench, then at 5, go to a personal computer (PC), then at 6, go to the machine. In some aspects, the machine may comprise one or more of a conveyor, a forklift, a workspace, or any other manufacturing systems/devices that may be used in the production process. This is an example process that may be taken to perform the task, but the disclosure is not intended to be limited to the example shown in FIG. 6. In some aspects, the operator may perform different steps in different order or may not go to or use all or some components of the workspace.

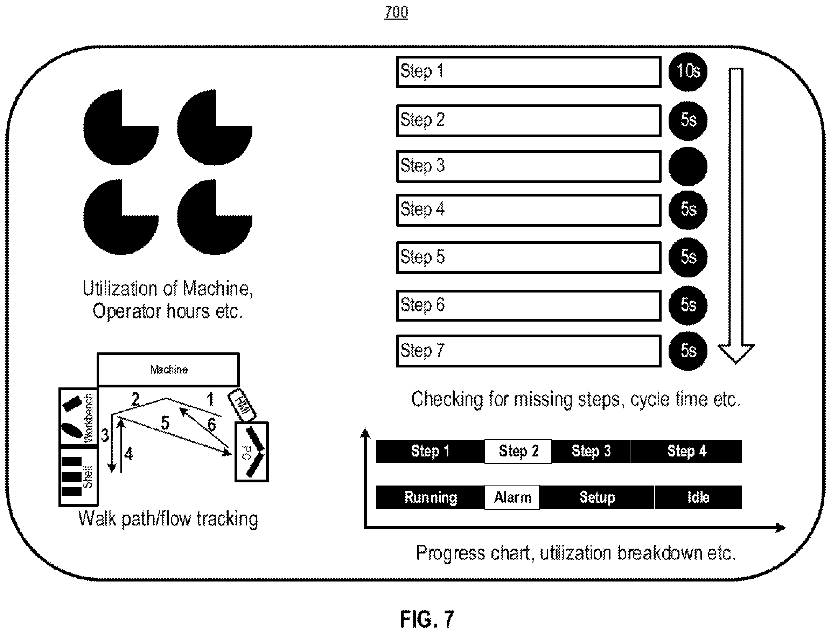

FIG. 7 shows a diagram 700 of example charts and a UI. The example charts and the UE may be utilized by end users to provide a visual representation of the data. Example visualization may include one or more of machine, operation time utilization charts, step-by-step completion tracking and cycle time tracking, operator walk path/trajectory tracking, job/operation progress tracking, or the like, or a combination thereof.

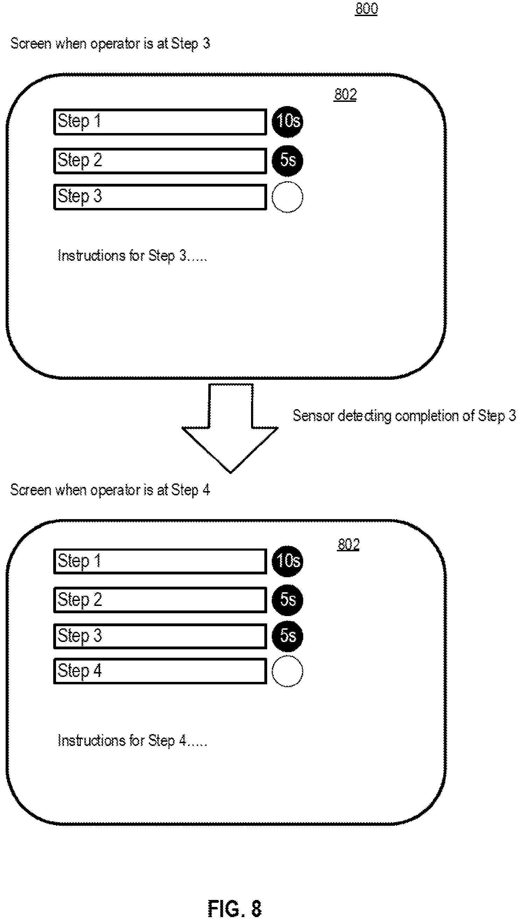

FIG. 8 shows a diagram 800 of an example of using the sensor signal for active work instruction prompting during operations. As shown in 802 of FIG. 8, the current visual instruction is shown for Step 3. Once the sensor detects completion of the Step 3 operation, a signal may be used to trigger the work instructions for the next step (e.g., Step 4) as shown in 804 FIG. 8. The sensor signals may be used for different styles of work instructions, such as but not limited to on screen displays, visual projection images, sound effects, voice instruction, or the like.

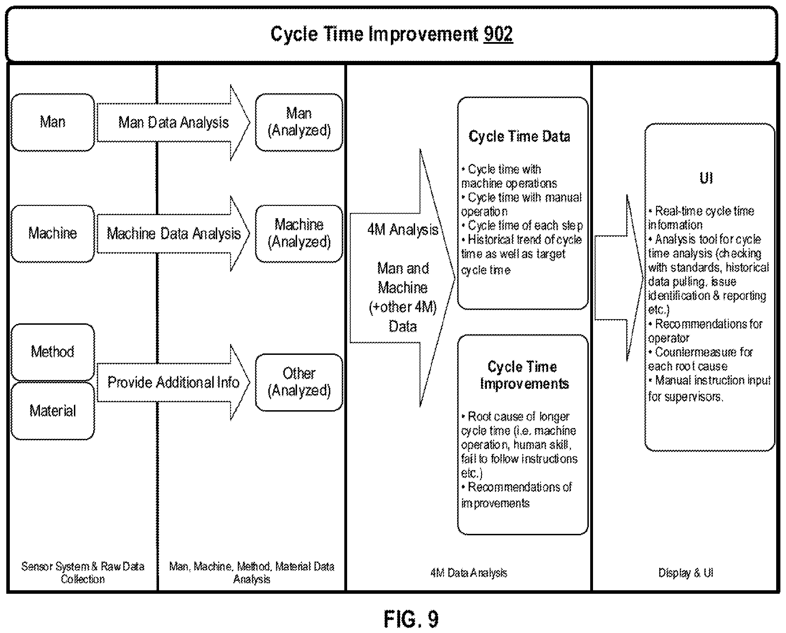

FIG. 9 shows a diagram of cycle time improvement 902. For example, the cycle time improvement may comprise instances where an increase in cycle time may occur to align the entire production process. For example, if the system detects that an operator is taking time making mistakes, then it checks machine status to determine the root cause of the mistakes. In some aspects, if the system detects a machine fault, then it may obtain insight from machine data, and also man data may be pulled to determine the issue with the machine. After the data is analyzed, the system may determine if there is a method to deal with the root cause with the machine. The system may generate recommendations based on past data and/or knowledge. The system may provide instructions on how to resolve the problem with the machine. For example, the UI may include suggestions and instructions provided based on past data, experience, manual knowledge, or the like. At least one advantage is providing cycle time tracking and improvements including human data. Conventional methods typically only use machine data Collecting human data without use of camera.

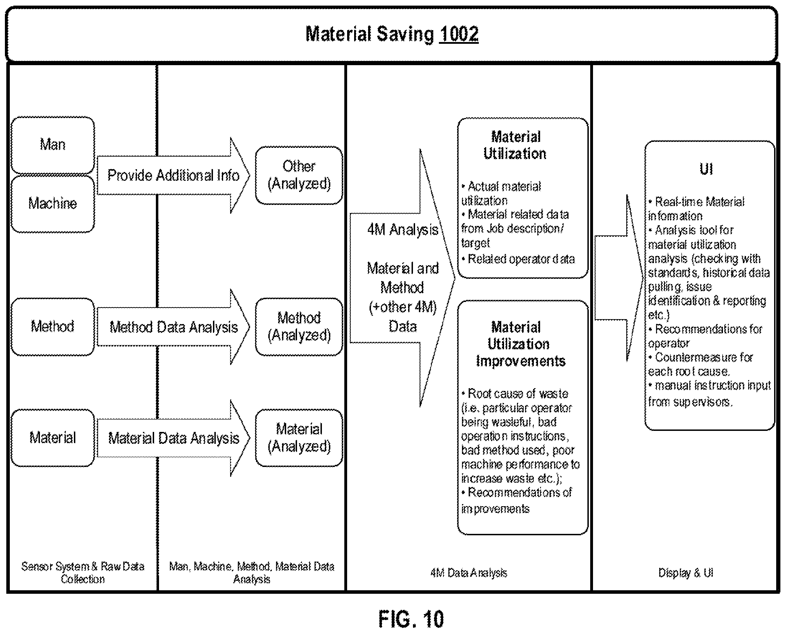

FIG. 10 shows a diagram of material saving 1002. For example, the system may obtain the data of actual material utilization versus job description/instructions to look for irregular data points in material usage and identify potential causes associated. In some instances, a particular operator may be more wasteful during production than others. To prevent particular operators from wasting materials, the system may take some countermeasures. For example, some countermeasures may be based on real-time data and AI analytics, and recommendations may be provided to the operator for improved actions. Also notifications may to be sent to supervisors to further investigate issue. The system may improve conventional data and analytics with accurate human operation data. Direct data from operator to provide more details of root cause issue and corresponding suggestions.

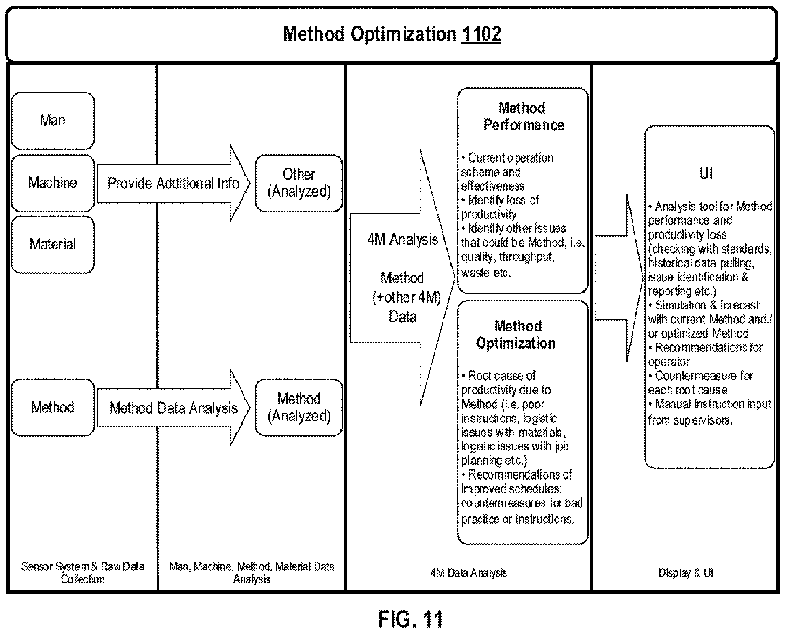

FIG. 11 shows a diagram of method optimization 1102. For example, the system may look up upcoming jobs scheduled for the day check man machine, material status with different method data used to find best combination and solution. The system may recommend an optimal execution scheme regarding operation schedule, machine schedule, parts/order routing schedule. The system may provide improved data analysis with addition of Human data, AI model can better suggest countermeasures and/or improvements.

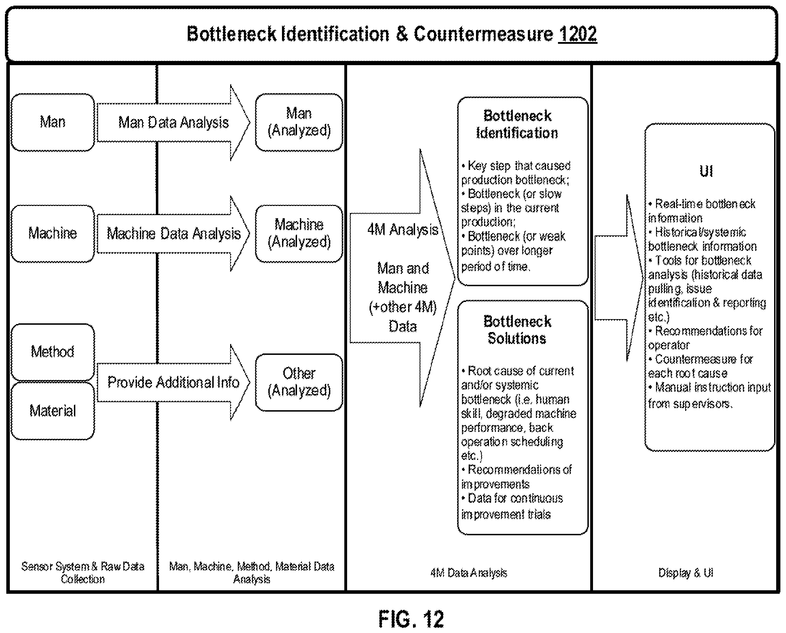

FIG. 12 shows a diagram of bottleneck identification and countermeasures 1202. For example, the system may track cycle times and identify steps taking a longer than expected cycle time and root cause (e.g. setup time or preparation on the machine). The system may analyze 4M data over a longer period of time to identify systemic issues with production bottleneck. In some instances, the root cause could vary, such as but not limited to a method issue in product design or process design, a machine issue with deteriorated machine performance due to wear/lack of maintenance, a man issue with not enough human resource to complete the job in time (also a Method issue) or lacking skill to complete in time. The system may recommend action for improvement (e.g., additional training, improved work instructions). The system may provide more accurate bottleneck identification and more details with granular information directly from the operator actions, as well as a more detailed data and analysis also lead to more precise and effective solution recommendations.

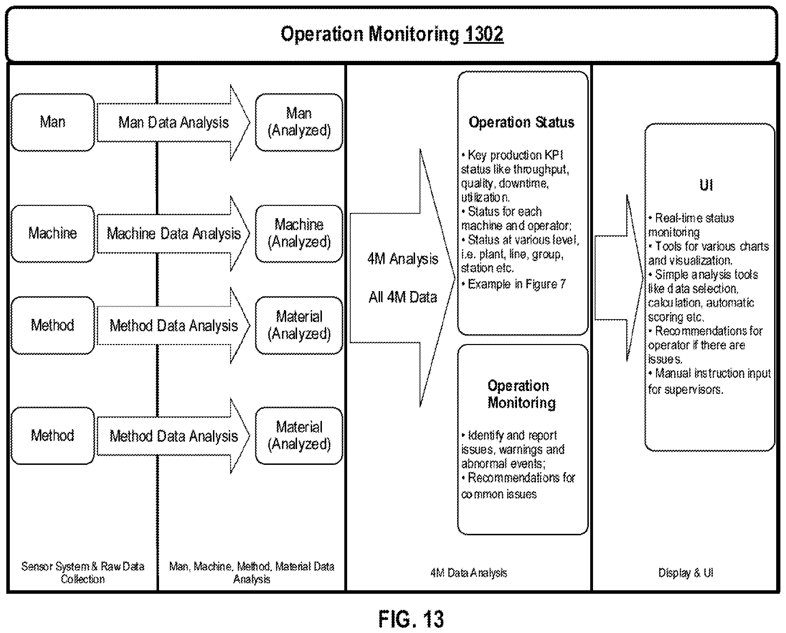

FIG. 13 shows a diagram of operation monitoring 1302. For example, the system may monitor the status like throughput, utilization, down-time and quality. The system may show the monitored data and provide shop floor operation data. The system may provide further visibility of shop floor operations data with the detailed human action data.

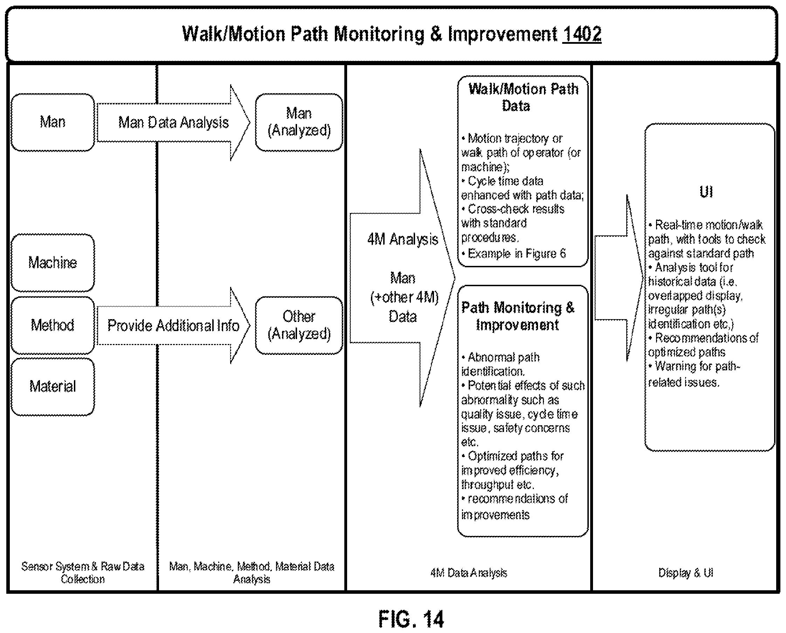

FIG. 14 shows a diagram of walk/motion path monitoring and improvement 1402. For example, the system may perform walk/motion path monitoring of the operator. For example, the system may compare man data with standardized/optimal trajectory. Results can be used for quality tracking or cycle time calculation. The walk/motion path may be linked with throughput, quality, operation scheme (e.g., method) to provide another level of information for shop floor visibility, such as but not limited to, checking motion path to identify missing steps that could cause quality issues, monitoring path to calculate cycle time, or use path data to identify optimal scheme. The system may provide another perspective of the operations, which may act as supplemental data for cycle time tracking, quality measurement, and schedule optimization.

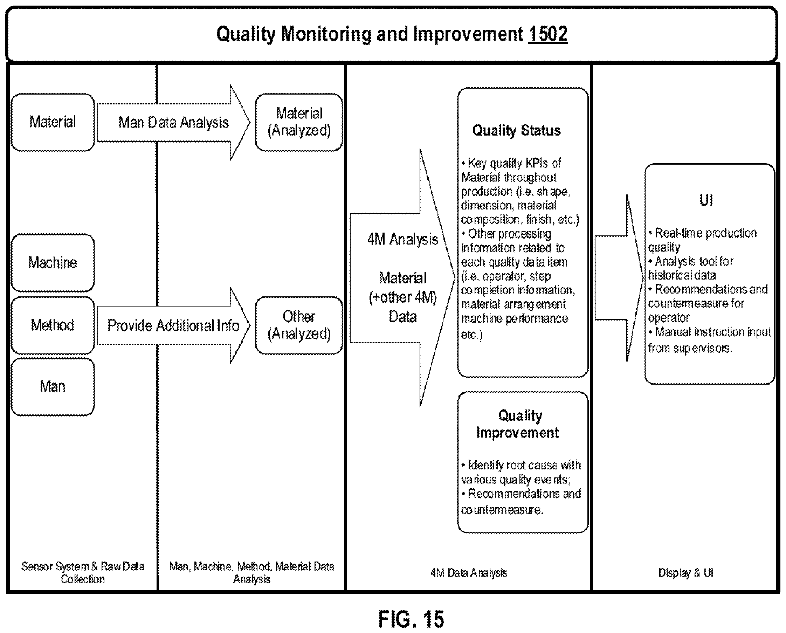

FIG. 15 shows a diagram of quality monitoring and improvement 1502. The system may perform quality tracking which may comprise real-time inspection and quality checking related to manual operations and parts quality (e.g., verification that all steps during assembly are executed and completed, all necessary parts have been installed; proper arrangement of parts are performed). The system may track the completion and quality status of each step in the production scheme, ensuring proper execution of all necessary steps. The system may perform real-time inspection and reporting of quality information, as well as store all quality data for traceability within a database. The system may allow for some preliminary quick in-process, real time quality inspection and bookkeeping.

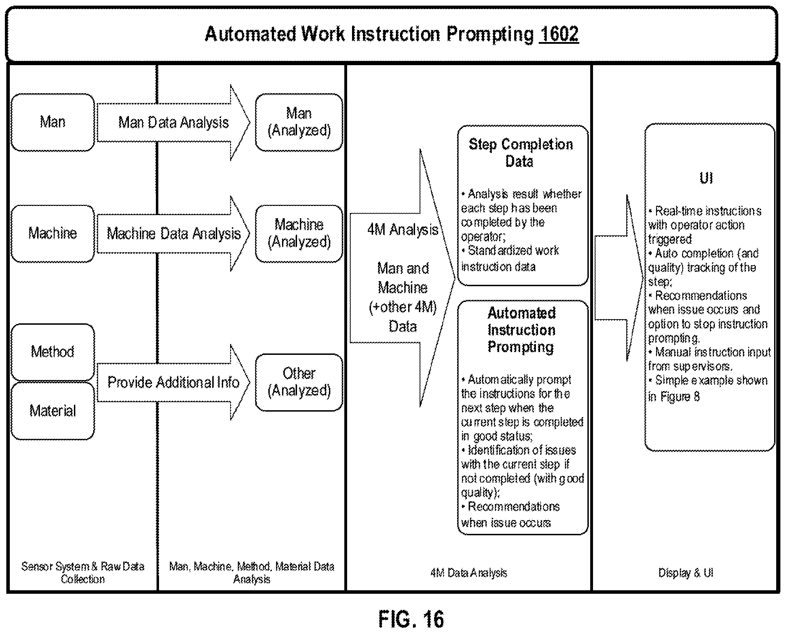

FIG. 16 shows a diagram of automated work instruction prompting 1602. The system may provide dynamic step-by-step work instructions based on current operator actions (e.g., completion of the current step). The system may dynamically and interactively provide work instructions, which may provide the operator with screen instructions for longer jobs on a step by step basis. The system may provide an effective way to provide on-demand work instructions on the shop floor, especially for operations with many steps.

Additionally, the system could be used either as a standalone software or as an add-on module as data collection and analysis tool to existing systems, such as but not limited to supervisory control and data acquisition (SCADA) or manufacturing execution system (MES).

The system provides an easy way to monitor and gather operational data with a lot of manual work, which may solve the problems discussed herein. The system may operate as a standalone system so that it can be attached to existing production environments with minimal impact on current operations and configurations. The sensor choice is very versatile and may be adaptive to many operation styles. The system is easily scalable with addition of sensors and data hubs. At least one advantage of the disclosure is that non-vision-based data collection may be utilized for this system, making it more appealing to most customers and actual operators.

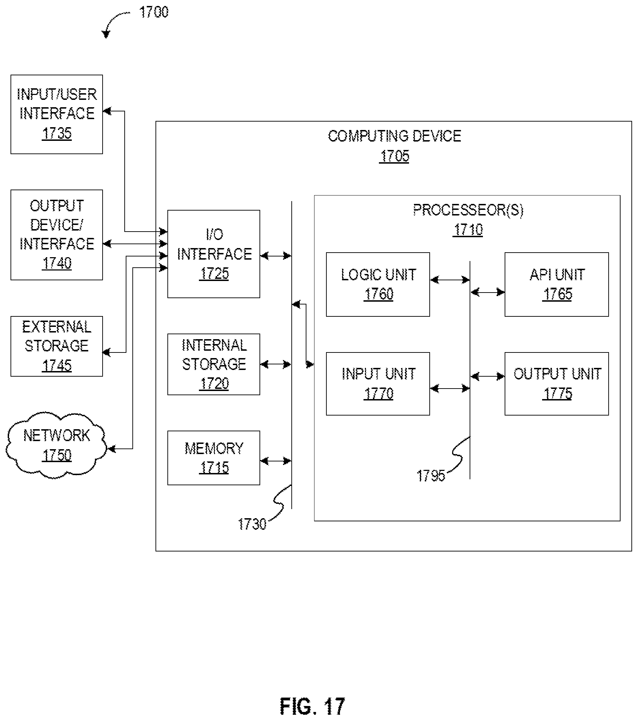

FIG. 17 illustrates an example computing environment with an example computer device suitable for use in some example implementations, as shown in connection with any of FIGs. 1-16. The computing environment can be used to facilitate implementation of the architectures illustrated in FIGS. 1-16. Further, any of the example implementations described herein can be implemented based on the architectures, APIs, microservice systems, and so on as illustrated in FIGS. 1-16. Computer device 1705 in computing environment 1700 can include one or more processing units, cores, or processors 1710, memory 1715 (e.g., RAM, ROM, and/or the like), internal storage 1720 (e.g., magnetic, optical, solid state storage, and/or organic), and/or I/O interface 1725, any of which can be coupled on a communication mechanism or bus 1730 for communicating information or embedded in the computer device 1705. I/O interface 1725 is also configured to receive images from cameras or provide images to projectors or displays, depending on the desired implementation.

Computer device 1705 can be communicatively coupled to input/user interface 1735 and output device/interface 1740. Either one or both of input/user interface 1735 and output device/interface 1740 can be a wired or wireless interface and can be detachable. Input/user interface 1735 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 1740 may include a display, television, monitor, printer, speaker, braille, or the like. In some example implementations, input/user interface 1735 and output device/interface 1740 can be embedded with or physically coupled to the computer device 1705. In other example implementations, other computer devices may function as or provide the functions of input/user interface 1735 and output device/interface 1740 for a computer device 1705.

Examples of computer device 1705 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 1705 can be communicatively coupled (e.g., via I/O interface 1725) to external storage 1745 and network 1750 for communicating with any number of networked components, devices, and systems, including one or more computer devices of the same or different configuration. Computer device 1705 or any connected computer device can be functioning as, providing services of, or referred to as a server, client, thin server, general machine, special-purpose machine, or another label.

I/O interface 1725 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 1700. Network 1750 can be any network or combination of networks (e.g., the Internet, local area network, wide area network, a telephonic network, a cellular network, satellite network, and the like).

Computer device 1705 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 1705 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 1710 can execute under any operating system (OS) (not shown), in a native or virtual environment. One or more applications can be deployed that include logic unit 1760, application programming interface (API) unit 1765, input unit 1770, output unit 1775, and inter-unit communication mechanism 1795 for the different units to communicate with each other, with the OS, and with other applications (not shown). The described units and elements can be varied in design, function, configuration, or implementation and are not limited to the descriptions provided. Processor(s) 1710 can be in the form of hardware processors such as central processing units (CPUs) or in a combination of hardware and software units.

In some example implementations, when information or an execution instruction is received by API unit 1765, it may be communicated to one or more other units (e.g., logic unit 1760, input unit 1770, output unit 1775). In some instances, logic unit 1760 may be configured to control the information flow among the units and direct the services provided by API unit 1725, input unit 1770, output unit 1775, in some example implementations described above. For example, the flow of one or more processes or implementations may be controlled by logic unit 1760 alone or in conjunction with API unit 1765. The input unit 1770 may be configured to obtain input for the calculations described in the example implementations, and the output unit 1775 may be configured to provide output based on the calculations described in example implementations.

Processor(s) 1710 can be configured to execute instructions for a method, the instructions involving obtaining production data corresponding to production machinery utilized during the production process; obtaining operator data corresponding to an operator operating the production machinery; obtaining material data corresponding to material used by at least one of the operator or the production machinery in the production process; calculating a calculation data set based on the production data, the operator data, and the material data; and performing an analysis at least on the operator data based on results of the calculation data set, for example, in any of FIGs. 1 to 16.

Processor(s) 1710 can be configured to execute instructions for a method, the method providing, as output, a user interface comprising results of the analysis of at least the operator data based on the results of the calculation data set, for example, in any of FIGs. 1 to 16.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the techniques of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (e.g., software stored on memory 1715), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the techniques of the present application. Various aspects and/or components of the described example implementations may be used singly or in any combination. It is intended that the specification and example implementations be considered as examples only, with the true scope and spirit of the present application being indicated by the following claims.

## Claims

1. A method for monitoring a production process, comprising:
obtaining production data corresponding to production machinery utilized during the production process;
obtaining operator data corresponding to an operator operating the production machinery;
obtaining material data corresponding to material used by at least one of the operator or the production machinery in the production process;
calculating a calculation data set based on the production data, the operator data, and the material data; and
performing an analysis at least on the operator data based on results of the calculation data set.

2. The method of claim 1, wherein the production data, the operator data, or the material data is obtained based on a non-vision based sensor system, wherein at least one of the production data, the operator data, or the material data is obtained from an existing system or database external to or internal to the production machinery.

3. The method of claim 2, wherein the non-vision based sensor system comprises sensors deployed to monitor the production machinery, the operator, and the material in the production process.

4. The method of claim 3, wherein the sensors monitor for presence of the operator or activities during the production process.

5. The method of claim 3, wherein the non-vision based sensor system provides real time production information related to the operator, wherein the calculation data set comprises the real time production information.

6. The method of claim 3, wherein the non-vision based sensor system provides real time production information related to the operator, the production machinery, and the material during one or more phases of the production process.

7. The method of claim 6, wherein the real time production information related to the operator, the production machinery, and the material during the one or more phases of the production process is analyzed to provide information related to the one or more phases of the production process.

8. The method of claim 7, wherein the information related to the one or more phases of the production process is configured to troubleshoot or optimize the one or more phases of the production process.

9. The method of claim 1, further comprising:
providing, as output, a user interface comprising results of the analysis of at least the operator data based on the results of the calculation data set.

10. A non-transitory computer readable medium, storing instructions for monitoring a production process for execution by one or more hardware processors, the instructions comprising:
obtaining production data corresponding to production machinery utilized during the production process;
obtaining operator data corresponding to an operator operating the production machinery;
obtaining material data corresponding to material used by at least one of the operator or the production machinery in the production process;
calculating a calculation data set based on the production data, the operator data, and the material data; and
performing an analysis at least on the operator data based on results of the calculation data set.

11. The non-transitory computer readable medium of claim 10, wherein the production data, the operator data, or the material data is obtained based on a non-vision based sensor system.

12. The non-transitory computer readable medium of claim 11, wherein the non-vision based sensor system comprises sensors deployed to monitor the production machinery, the operator, and the material in the production process.

13. The non-transitory computer readable medium of claim 12, wherein the sensors monitor for presence of the operator or activities during the production process.

14. The non-transitory computer readable medium of claim 12, wherein the non-vision based sensor system provides real time production information related to the operator, wherein the calculation data set comprises the real time production information.

15. The non-transitory computer readable medium of claim 12, wherein the non-vision based sensor system provides real time production information related to the operator, the production machinery, and the material during one or more phases of the production process.

16. The non-transitory computer readable medium of claim 15, wherein the real time production information related to the operator, the production machinery, and the material during the one or more phases of the production process is analyzed to provide information related to the one or more phases of the production process.

17. The non-transitory computer readable medium of claim 16, wherein the information related to the one or more phases of the production process is configured to troubleshoot or optimize the one or more phases of the production process.

18. The non-transitory computer readable medium of claim 10, the instructions further comprising:
providing, as output, a user interface comprising results of the analysis of at least the operator data based on the results of the calculation data set.

19. A system, comprising:
a production machinery utilized in a production process; and
a processor, configured to:
obtain production data corresponding to the production machinery;
obtain operator data corresponding to an operator operating the production machinery;
obtain material data corresponding to material used by at least one of the operator or the production machinery in the production process;
calculate a calculation data set based on the production data, the operator data, and the material data; and
perform an analysis at least on the operator data based on results of the calculation data set.

20. The system of claim 19, the processor configured to:
provide, as output, a user interface comprising results of the analysis of at least the operator data based on the results of the calculation data set.

## Amended claims

### Amended claims in accordance with Rule 137(2) EPC.

1. A method for monitoring a production process, the method steps being executed in a system (100) comprising means for data acquisition (102, 104), means for calculation, means for analysis, storage means and display means, the method comprising:
obtaining production data corresponding to production machinery utilized during the production process;
obtaining operator data corresponding to an operator operating the production machinery;
obtaining material data corresponding to material used by at least one of the operator or the production machinery in the production process;
calculating a calculation data set based on the production data, the operator data, and the material data; and
performing an analysis at least on the operator data based on results of the calculation data set,
wherein one of the production data, the operator data, or the material data is obtained based on a non-vision based sensor system, and wherein at least one of the production data, the operator data, or the material data is obtained from a database external to or internal to the production machinery,
wherein the non-vision based sensor system comprises sensors deployed to monitor the production machinery, the operator, and the material in the production process,
and the non-vision based sensor system provides real time production information related to the operator, wherein the calculation data set comprises the real time production information.

2. The method of claim 1, wherein the sensors monitor for presence of the operator or activities during the production process.

3. The method of claim 1, wherein the non-vision based sensor system provides real time production information related to the operator, the production machinery, and the material during one or more phases of the production process.

4. The method of claim 3, wherein the real time production information related to the operator, the production machinery, and the material during the one or more phases of the production process is analyzed to provide information related to the one or more phases of the production process.

5. The method of claim 4, wherein the information related to the one or more phases of the production process is configured to troubleshoot or optimize the one or more phases of the production process.

6. The method of claim 1, further comprising:
providing, as output, a user interface comprising results of the analysis of at least the operator data based on the results of the calculation data set.

7. A non-transitory computer readable medium, storing instructions for monitoring a production process for execution by one or more hardware processors, the instructions comprising:
obtaining production data corresponding to production machinery utilized during the production process;
obtaining operator data corresponding to an operator operating the production machinery;
obtaining material data corresponding to material used by at least one of the operator or the production machinery in the production process;
calculating a calculation data set based on the production data, the operator data, and the material data; and
performing an analysis at least on the operator data based on results of the calculation data set,
wherein one of the production data, the operator data, or the material data is obtained based on a non-vision based sensor system, and wherein at least one of the production data, the operator data, or the material data is obtained from a database external to or internal to the production machinery,
wherein the non-vision based sensor system comprises sensors deployed to monitor the production machinery, the operator, and the material in the production process and provides real time production information related to the operator, wherein the calculation data set comprises the real time production information.

8. The non-transitory computer readable medium of claim 7, wherein the non-vision based sensor system provides real time production information related to the operator, the production machinery, and the material during one or more phases of the production process.

9. The non-transitory computer readable medium of claim 8, wherein the real time production information related to the operator, the production machinery, and the material during the one or more phases of the production process is analyzed to provide information related to the one or more phases of the production process.

10. The non-transitory computer readable medium of claim 9, wherein the information related to the one or more phases of the production process is configured to troubleshoot or optimize the one or more phases of the production process.

11. The non-transitory computer readable medium of claim 7, the instructions further comprising:
providing, as output, a user interface comprising results of the analysis of at least the operator data based on the results of the calculation data set.

12. A system (100), comprising:
a production machinery utilized in a production process; and
a processor, configured to:
obtain production data corresponding to the production machinery;
obtain operator data corresponding to an operator operating the production machinery;
obtain material data corresponding to material used by at least one of the operator or the production machinery in the production process;
calculate a calculation data set based on the production data, the operator data, and the material data; and
perform an analysis at least on the operator data based on results of the calculation data set,
a non-vision based sensor system for obtaining one of the production data, the operator data, or the material data,
means for obtaining at least one of the production data, the operator data, or the material data from a database external to or internal to the production machinery,
wherein the non-vision based sensor system comprises sensors deployed to monitor the production machinery, the operator, and the material in the production process and provides real time production information related to the operator, wherein the calculation data set comprises the real time production information.

13. The system of claim 12, the processor configured to:
provide, as output, a user interface comprising results of the analysis of at least the operator data based on the results of the calculation data set.
